Europäisches Patentamt

European Patent Office

Office européen des brevets

(19)

(11) Veröffentlichungsnummer : **0 092 847**
**B1**

(12) **EUROPÄISCHE PATENTSCHRIFT**

(45) Veröffentlichungstag der Patentschrift :
28.05.86

(51) Int. Cl.⁴ : **B 23 H   1/04**

(21) Anmeldenummer : **83104089.4**

(22) Anmeldetag : **26.04.83**

(54) Werkzeugelektrode für die elektroerosive Bearbeitung.

(30) Priorität : **28.04.82 FR 8207304**
         **16.11.82 FR 8219125**

(43) Veröffentlichungstag der Anmeldung :
**02.11.83 Patentblatt 83/44**

(45) Bekanntmachung des Hinweises auf die Patenterteilung : **28.05.86 Patentblatt 86/22**

(84) Benannte Vertragsstaaten :
**CH DE GB IT LI NL**

(56) Entgegenhaltungen :
**FR-A- 1 470 569**
**FR-A- 2 097 709**
**FR-A- 2 200 771**

(73) Patentinhaber : **Le Carbone-Lorraine S.A.**
**Tour Manhattan 5-6 Place de l'Iris La Défense 2**
**F-92400 Courbevoie (FR)**

(72) Erfinder : **Petitimbert, Jean**
**23, rue de la Convention**
**F-95600 Eaubonne (FR)**

(74) Vertreter : **Lewinsky, Dietrich et al**
**Gotthardstrasse 81**
**D-8000 München 21 (DE)**

EP 0 092 847 B1

**Beschreibung**

Die Erfindung betrifft eine Werkzeugelektrode für die elektroerosive Bearbeitung, mit Bohrungen für die Zufuhr einer dielektrischen Flüssigkeit und/oder für eine Entgasung. Derartige Werkzeugelektroden sind bekannt. Die Bohrungen für die Zufuhr der Spülflüssigkeit und gegebenenfalls für die Entgasung haben den Nachteil, daß in dem bearbeiteten Werkstück Kerne oder Nadeln stehenbleiben, die während ihrer Bildung zu einer Instabilität des Erosionsvorganges und damit zu einer Beeinträchtigung der Leistungsfähigkeit der Elektroerosionsanlage führen sowie anschließend durch eine zusätzliche Bearbeitung entfernt werden müssen.

Es sind daher auch bereits für das Erodieren kleiner Löcher Werkzeugelektroden bekannt, die Kanäle sehr kleinen Querschnitts oder spiralig gewundene Kanäle aufweisen, durch welche die Bildung von Kernen vermieden wird. Diese Elektroden haben jedoch die folgenden Nachteile :

Im Falle von Kanälen sehr kleinen Querschnitts wird zwar die Bildung von Kernen vermieden, jedoch entstehen erhebliche Verluste an dielektrischer Flüssigkeit, wodurch eine besondere Dosiervorrichtung für die Spülflüssigkeit erforderlich ist. Ferner können auch nur Elektroden aus metallischen Werkstoffen verwendet werden.

Im Falle von Spiralkanälen wird zwar ebenfalls die Bildung von Kernen vermieden, jedoch verbleibt in den bearbeiteten Werkstücken eine kuppelartige Erhebung, die anschließend durch eine zusätzliche Bearbeitung entfernt werden muß.

Aus der FR-A-2 097 709 ist bereits eine Werkzeugelektrode für die elektroerosive Bearbeitung bekannt, die eine Bohrung für die Zufuhr einer dielektrischen Spülflüssigkeit und/oder eine Entgasung aufweist, in welche Bohrung ein Flüssigkeitsverteiler eingesetzt ist, der aus einem Körper quadratischen Querschnitts besteht, wobei die Länge der Diagonale annähernd gleich dem Durchmesser der ihn aufnehmenden Bohrung ist und die Flüssigkeitsverteilung über die Spalte zwischen den Seitenflächen des Körpers und der Wand der Bohrung erfolgt. Zwar wird mit dieser Werkzeugelektrode vermieden, daß im Werkstück Nadeln oder Kerne stehenbleiben, jedoch läßt sich der Summenquerschnitt der Spalte zwischen den Seitenflächen des Körpers und der Wand der Bohrung sowie der Strömungswiderstand dieser Spalte praktisch nicht an die für den Prozess benötigte Spülflüssigkeitsmenge und deren Druck bzw. an die jeweiligen Entgasungsbedingungen anpassen.

Der Erfindung liegt die Aufgabe zugrunde, eine Werkzeugelektrode der einleitend angegebenen Gattung zu schaffen, die keine Kerne oder Nadeln entstehen läßt, aus den üblichen Elektrodenwerkstoffen bestehen kann und eine einfache Anpassung des für die Zufuhr der dielektrischen Spülflüssigkeit und/oder für eine Entgasung zur Verfügung stehenden Querschnitts an den jeweiligen Anwendungsfall erlaubt.

Diese Aufgabe ist erfindungsgemäß dadurch gelöst, daß in die Bohrungen ein Flüssigkeitsverteiler eingesetzt ist, der aus einem zu der Bohrung annähernd querschnittsgleichen Körper besteht, daß der Körper zur Flüssigkeitsverteilung über einen Teil $l_2$ seiner Länge L einen zentralen Kanal kleinen Durchmessers d hat, welcher an einem der Enden des Körpers mündet, und daß der Körper wenigstens einen Schlitz aufweist, der von dem anderen Ende des Körpers ausgeht und an seinen Seiten mündet, wobei die Breite a des Schlitzes kleiner als der Durchmesser d des Kanals und die Länge $l_1$ dieses Schlitzes größer als $L-l_2$ ist und das mit dem Schlitz versehene Ende des Körpers sich am Arbeitsbereich der Elektrode befindet.

Die Länge L des Flüssigkeitsverteilers ist gleich oder kleiner als die Tiefe der Bohrung, in die er eingepreßt werden soll.

Die Breite a der Schlitze wird so klein als möglich gewählt und ist vorzugsweise doppelt so groß wie der Arbeitsspalt.

Die Zahl der Schlitze wird in Abhängigkeit von dem zu verteilenden Volumen an dielektrischer Spülflüssigkeit festgelegt : Die Summe der Schlitzquerschnitte muß diesem Volumen entsprechen. Ein einziger Schlitz kann ausreichen.

Der vorgeschlagene Flüssigkeitsverteiler kann auch für Elektroden Verwendung finden, die für die Spülung oder für die Entgasung Bohrungen mit relativ kleinen Durchmessern von beispielsweise zwischen 1 und 3 mm haben. Im letzteren Fall kann der Durchmesser der Bohrungen über ihre gesamte Länge oder über einen Teil ihrer Länge vergrößert werden.

In der Zeichnung sind Flüssigkeitsverteiler und hiermit ausgerüstete Elektroden nach der Erfindung in beispielsweise gewählten Ausführungsformen veranschaulicht. Es zeigt :

Figur 1  einen axialen Schnitt durch eine erste Ausführungsform eines Flüssigkeitsverteilers,

Figur 2  eine Aufsicht auf den Flüssigkeitsverteiler nach Figur 1,

Figur 3 bis 5  verschiedenen Ausführungsformen von mit Flüssigkeitsverteilern ausgestatteten Elektroden.

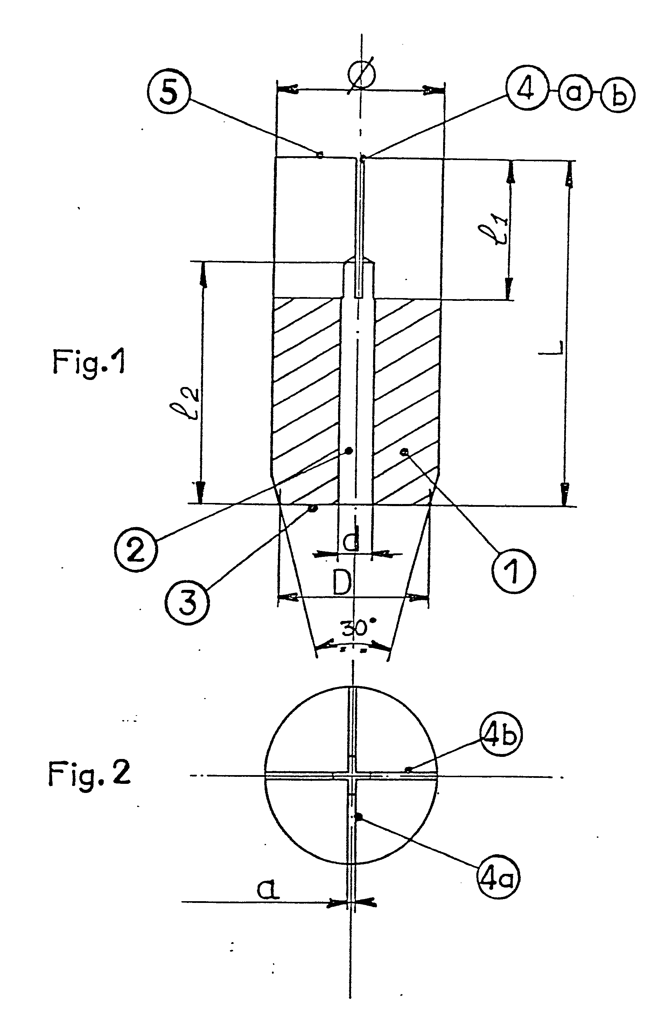

Der Flüssigkeitsverteiler nach den Figuren 1 und 2 besteht aus einem Körper 1 der Länge L und des Durchmessers $\Phi$, wobei $\Phi$ etwa gleich dem Durchmesser der Bohrung der nicht dargestellten Elektrode ist, für die der Flüssigkeitsverteiler vorgesehen ist.

Der Körper 1 ist mit einem Kanal 2 versehen, der über eine Länge $l_2$ den Durchmesser d hat und an der Stirnfläche 3 des Körpers 1 mündet.

An der anderen Stirnfläche 5 befinden sich zwei sich kreuzende Schlitze 4a und 4b, die die Tiefe $l_1$ und die Breite a haben.

Der Körper 1 ist im Bereich seiner unteren Stirnfläche 3 an den Seiten abgeschrägt oder angefast (Winkel 30° ; Durchmesser D). Diese Anschrägung dient dem leichteren Einsetzen des Flüssigkeitsverteilers in die Bohrung. Die Anschrägung ist jedoch nicht unbedingt erforderlich.

Der Flüssigkeitsverteiler kann ganz einfach in die Bohrung eingepreßt werden. Andere Befestigungsarten wie etwa Einkleben, Einschrauben und so weiter sind ebenfalls möglich.

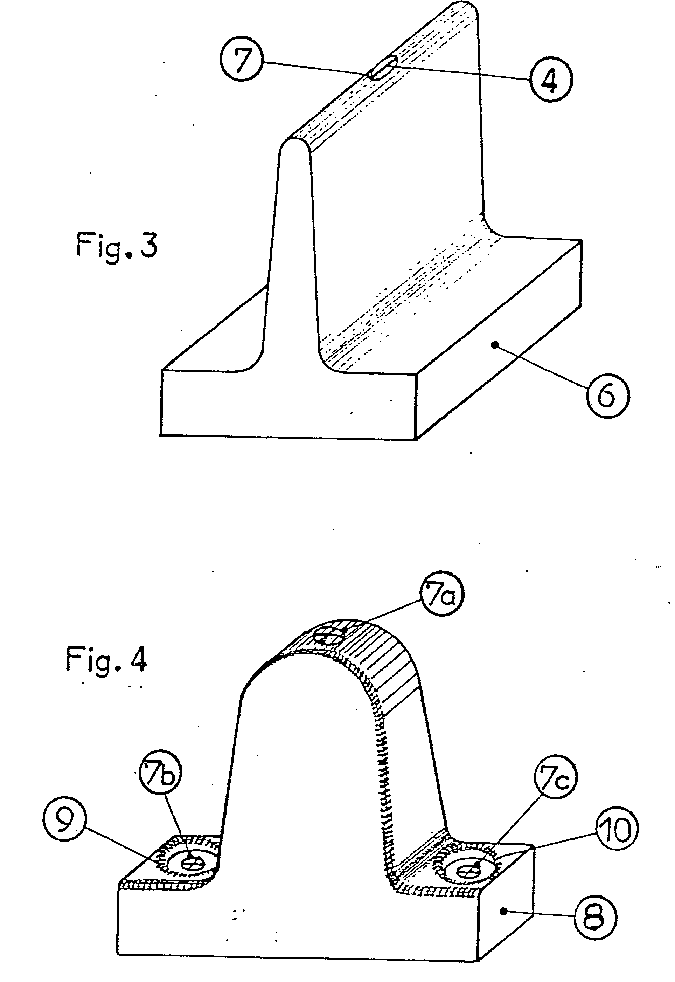

Die Figuren 3, 4 und 5 zeigen beispielhaft einige Formen von Elektroden, die mit einem oder mehreren Flüssigkeitsverteilern versehen sind.

Figur 3 zeigt in perspektivischer Darstellung eine Elektrode 6, die mit einem Flüssigkeitsverteiler 7 ausgestattet ist, der einen einzigen Schlitz 4 hat. Diese Elektrode dient zur Herstellung einer Druckgußform.

Figur 4 zeigt eine perspektivische Darstellung einer anderen Elektrode 8, die mit mehreren Flüssigkeitsverteilern 7a, 7b, 7c versehen ist, von denen jeder zwei Schlitze 4a und 4b hat. Die Flüssigkeitsverteiler 7b und 7c sind jeweils in in der Elektrode 8 ausgebildete Vertiefungen 9 und 10 eingesetzt. Diese Elektrode dient zur Herstellung eines Schmiedegesenks.

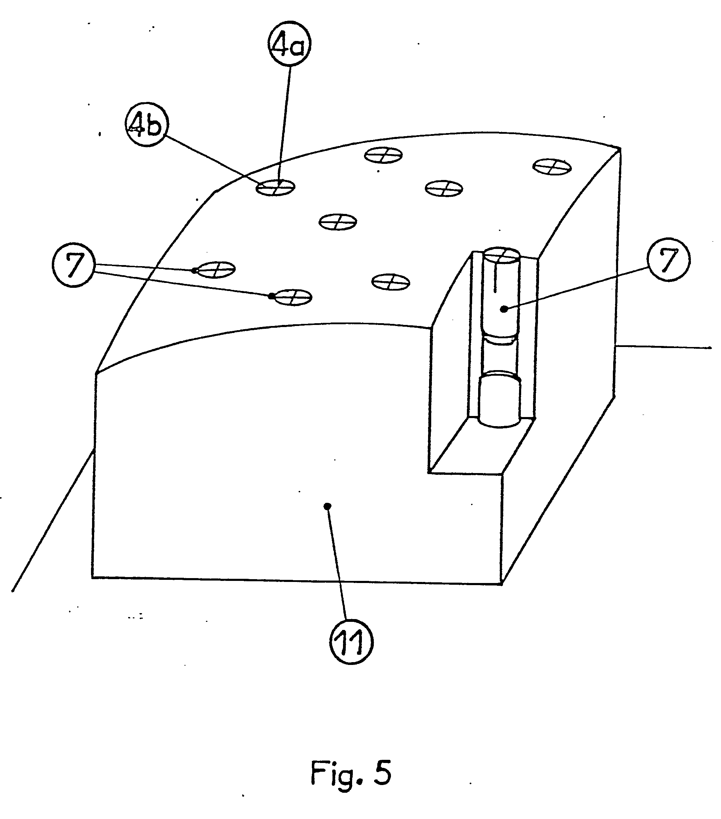

Figur 5 zeigt eine perspektivische Darstellung eines Teils einer Elektrode 11, die mit mehreren Flüssigkeitsverteilern 7 ausgestattet ist, von denen jeder zwei sich kreuzende Schlitze 4a und 4b hat. Einer der Flüssigkeitsverteiler ist in seiner vollen Länge in dem geschnittenen Teilbereich der Elektrode 11 zu erkennen. Diese Elektrode dient zur Herstellung einer Spritzgießform für Kunststoffartikel.

Auch großflächige Elektroden mit einer beispielsweise mehr als 1 m² betragenden Arbeitsfläche können mit den Flüssigkeitsverteilern ausgerüstet werden. Solche Elektroden haben im allgemeinen zahlreiche Bohrungen für die Spülung und die Entgasung. In jede derselben kann ein geeigneter Flüssigkeitsverteiler eingesetzt werden.

Zusätzlich zu seinem technischen Vorteil hat der Verteiler für die dielektrische Flüssigkeit den Vorteil, daß er von jedem Benutzer eingesetzt werden kann.

Manche Elektroden haben für die Spülung oder die Entgasung Bohrungen mit einem relativ kleinen, z. B. zwischen 1 und 3 mm liegenden Durchmesser, um die Enfernung der in dem Werkstück verbleibenden Kerne zu erleichtern. Auch solche Elektroden können mit Flüssigkeitsverteilern ausgestattet werden. Der Benutzer muß lediglich den Durchmesser der Bohrungen über deren gesamte Länge oder einen Teil derselben vergrößern, um die Flüssigkeitsverteiler anbringen zu können. Für den Benutzer erübrigt sich damit die spätere Beseitigung von Kernen.

Die nachfolgende Tabelle enthält für drei beispielhafte Ausführungen von Flüssigkeitsverteilern deren Abmessungen in mm.

|  | N° 1 | N° 2 | N° 3 |
|---|---|---|---|
| O | 3 | 6 | 10 |
| D | 2 | 5 | 9 |
| d | 1,1 | 2 | 4 |
| L | 12 | 15 | 20 |
| $l_1$ | 5 | 6 | 8 |
| $l_2$ | 9 | 11 | 14 |

Die Breite a der Schlitze liegt für diese Ausführungsbeispiele bei 0,2 mm.

**0 092 847**

Der Flüssigkeitsverteiler kann an jeden gebräuchlichen elektrodenwerkstoff wie etwa Graphit, Kupfer, Wolframkupfer usw. angepaßt werden. Im einfachsten Fall besteht der Flüssigkeitsverteiler aus dem gleichen Werkstoff wie die Elektrode, so daß er auch das gleiche Verhalten hinsichtlich des Verschleißes und des Durchflusses hat.

**Patentansprüche**

1. Werkzeugelektrode für die elektroerosive Bearbeitung, mit mindestens einer Bohrung für die Zufuhr einer dielektrischen Spülflüssigkeit und/oder für eine Entgasung, dadurch gekennzeichnet, daß in die Bohrungen ein Flüssigkeitsverteiler eingesetzt ist, der aus einem zu der Bohrung annähernd querschnittsgleichen Körper (1) besteht, daß der Körper (1) zur Flüssigkeitsverteilung über einen Teil $l_2$ seiner Länge L einen zentralen Kanal (2) kleinen Durchmessers d hat, welcher an einem (3) der Enden des Körpers (1) mündet, und daß der Körper (1) wenigstens einen Schlitz (4) aufweist, der von dem anderen Ende (5) des Körpers (1) ausgeht und an seinen Seiten mündet, wobei die Breite a des Schlitzes (4) kleiner als der Durchmesser d des Kanals (2) und die Länge $l_1$ dieses Schlitzes größer als L-$l_2$ ist und das mit dem Schlitz (4) versehene Ende (5) des Körpers (1) sich am Arbeitsbereich der Elektrode (6, 8, 11) befindet.

2. Elektrode nach Anspruch 1, dadurch gekennzeichnet, daß der Körper (1) an seinem dem Schlitz (4) oder den Schlitzen (4a, 4b) abgewandten Ende (3) abgeschrägt ist.

3. Elektrode nach Anspruch 1 oder 2, dadurch gekennzeichnet, daß der Flüssigkeitsverteiler eingeklebt oder eingeschraubt ist.

4. Elektrode nach einem der Ansprüche 1 bis 3, dadurch gekennzeichnet, daß der Flüssigkeitsverteiler aus dem gleichen Werkstoff wie die Elektrode, also insbesondere aus Graphit, Kupfer oder Wolframkupfer besteht.

**Claims**

1. A tool electrode for electrical discharge machining, having at least one bore for the feed of a dielectric flushing fluid and/or for the removal of gas, characterised in that fitted into the bores is a fluid distributor which comprises a body (1) which is of approximately the same cross-section as the bore, that the body (1) for fluid distribution is provided over a portion $l_2$ of its length L with a central passage (2) of small diameter d which opens at one (3) of the ends of the body (1), and that the body (1) has at least one slot (4) which starts from the other end (5) of the body (1) and opens at the sides thereof, wherein the width a of the slot (4) is less than the diameter d of the passage (2) and the length $l_1$ of said slot is greater than L-$l_2$ and the end (5) of the body (1) which is provided with the slot (4) is disposed at the working region of the electrode (6, 8, 11).

2. An electrode according to claim 1 characterised in that the body (1) is bevelled at its end (3) which is remote from the slot (4) or the slots (4a, 4b).

3. An electrode according to claim 1 or claim 2 characterised in that the fluid distributor is glued or screwed in position.

4. An electrode according to one of claims 1 to 3 characterised in that the fluid distributor comprises the same material as the electrode, being therefore in particular graphite, copper or tungsten copper.

**Revendications**

1. Electrode d'usinage par électro-érosion avec au moins un trou pour l'admission de liquide diélectrique et/ou de dégazage, caractérisée par le fait qu'un répartiteur de liquide est inséré dans les trous, répartiteur constitué d'un corps (1) de section voisine de celle du trou auquel il est destiné pour pouvoir y être inséré à force et comportant pour la répartition de diélectrique un canal central (2) de petit diamètre d sur une partie $l_2$ de sa longueur L qui débouche à l'une (3) des extrémités du corps (1), et en ce que le corps a une encoche (4) partant de l'autre extrémité (5) du corps (1) et débouchant sur ses côtes, la largeur a de l'encoche (4) étant inférieure au diamètre d du canal (2) et la longueur $l_1$ de l'encoche étant supérieure à L-$l_2$, et en ce que l'extrémité (5) munie de l'encoche (4) se trouve dans la zone de travail de l'électrode (6, 8, 11).

2. Electrode selon la revendication 1 caractérisée par le fait que le corps (1) est chanfreiné à l'extrémité opposée (3) à l'encoche (4) ou bien aux encoches (4a, 4b).

3. Electrode selon la revendication 1 ou 2, caractérisée par le fait que le répartiteur de liquide est collé ou vissé.

4. Electrode selon l'une des revendications 1 à 3, caractérisée par le fait que le répartiteur de liquide est constitué d'un matériau de même nature que celui de l'électrode c'est-à-dire en particulier d'un matériau choisi parmi le graphite, le cuivre, les cupro-tungstènes.

4

Fig.1

Fig.2

Fig. 3

Fig. 4

Fig. 5